(19) **Europäisches Patentamt**

**European Patent Office**

**Office européen des brevets**

(11) **EP 1 120 600 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(51) Int Cl.⁷: **F21V 8/00**

(21) Anmeldenummer: **00126302.9**

(22) Anmeldetag: **01.12.2000**

(54) **Lichtleiterleuchte mit einer linearen Prismenstruktur**

Light guide lamp with linear prismatic structure

Lampe à guide de lumière à structure prismatique linéaire

(84) Benannte Vertragsstaaten:
**AT BE CH CY DE DK ES FI FR GB GR IE IT LI LU MC NL PT SE TR**

(30) Priorität: **01.12.1999 DE 19957812**
**29.12.1999 DE 19963685**

(43) Veröffentlichungstag der Anmeldung:
**01.08.2001 Patentblatt 2001/31**

(73) Patentinhaber: **Siteco Beleuchtungstechnik GmbH**
**83301 Traunreut (DE)**

(72) Erfinder:
• **Belloni, Paola**
**83278 Traunstein (DE)**
• **Zou, Han**
**Windsor, NJ 08561 (US)**

(74) Vertreter: **Schohe, Stefan et al**
**Forrester & Boehmert**
**Pettenkoferstrasse 20-22**
**80336 München (DE)**

(56) Entgegenhaltungen:
| | |
|---|---|
| **EP-A- 0 846 915** | **WO-A-96/23166** |
| **US-A- 4 550 975** | **US-A- 5 396 350** |
| **US-A- 5 521 725** | **US-A- 5 995 690** |

• **PATENT ABSTRACTS OF JAPAN Bd. 1997, Nr. 02 28 Februar 1997 & JP 08 262 438 A (LPS ELECTRIC CO LTD) 11 Oktober 1996**
• **PATENT ABSTRACTS OF JAPAN Bd. 1999, Nr. 05 31 Mai 1999 & JP 11 052 138 A (DENSO CORP) 26 Februar 1999**

**Beschreibung**

Die Erfindung betrifft allgemein Leuchten mit mindestens einem Lichtleiter, in den von einer oder mehreren Lampen an einer oder mehreren Lichteinkoppelseiten Licht eingekoppelt wird und der eine oder mehrere Lichtauskoppelseiten aufweist, über welche Licht ausgekoppelt wird, wobei an mindestens einer Lichtauskoppelseite eine Struktur zur Erzeugung einer Abschirmung vorgesehen ist. Eine derartige Leuchte ist beispielsweise aus der EP 0 846 915 A1 bekannt. Bei dieser bekannten Leuchte wurden zum Auskoppeln Prismenstrukturen verwendet, wie sie beispielsweise aus WO 95/12782 oder WO 96/23166 bekannt sind. Diese beiden letztgenannten Druckschriften betreffen Hintergrundbeleuchtungen für LCD-Anzeigen oder dgl., mit denen eine möglichst gleichmäßige Lichtverteilung über der Anzeige erreicht werden soll. Es hatte sich in überraschender Weise herausgestellt, daß die dort für Hintergrundbeleuchtungen beschriebenen Strukturen in vorteilhafter Weise verwendet werden können, um bei einer Leuchte zur Beleuchtung von Innenräumen eine Abschirmung zu erzeugen, wie sie beispielsweise von den geltenden Normen bzw. Vorschlägen für künftige Normen für Bildschirmarbeitsplätze gefordert wird. Diese Normen erfordern eine Abschirmung sowohl in der Richtung parallel zu der Lampenachse als auch in der Richtung senkrecht zu der Lampenachse, so daß die Prismenstruktur eine Abschirmung in mehrere verschiedene Richtungen leisten muß. Aus diesem Grunde wurden bislang für derartige Leuchten ausschließlich pyramidenstumpfförmige Prismen verwendet, welche eine Abschirmung in zwei zueinander senkrechten Richtungen ermöglichen. Diese pyramidenstumpfförmigen Prismen haben sich zwar hinsichtlich ihrer Abschirmungseigenschaften bewährt. Nachteilig ist jedoch, daß aufgrund der Pyramidenstumpfform nur ein verhältnismäßig kleiner Anteil der Lichtaustrittsfläche zur Lichtauskopplung in diese Prismen zur Verfügung steht, was zu einem relativ geringen Wirkungsgrad der Lichtauskopplung führt.

In der europäischen Patentanmeldung 99 110 141.1 wird zwar die Verwendung von linienförmigen Prismenstrukturen vorgeschlagen. Bislang ging man jedoch davon aus, daß derartige Prismenstrukturen im wesentlichen nur eine Abschirmung in einer Ebene senkrecht zu der Längsrichtung der Prismen erzeugen, während eine Abschirmung in einer Ebene parallel zu der Längsrichtung der Prismen nicht zu einer Abschirmung führen würde, die den Normen bzw. Normvorschlägen beispielsweise für Bildschirmarbeitsplätze entspricht. Daher wurden für Anwendungen, welche eine Abschirmung in mehreren Ebenen erforderten, zwei senkrecht zueinander angeordnete Prismenstrukturen vorgeschlagen.

US-PS 5 995 690 beschreibt eine Vorrichtung zum Auskoppeln von Licht aus einem Lichtleitsystem mit besonderer Anwendung bei Glasfasern oder Hintergrundbeleuchtungen für LCDs. Zur Lichtauskopplung aus einem Lichtleiter sind Lichtauskoppelelemente vorgesehen, welche sich, bezogen auf einen Querschnitt parallel zu der Lichtausbreitungsrichtung, von dem Lichtleiter weg verbreitern. Gemäß einer Ausführungsform sind pyramidenstumpfförmige Strukturen zur Lichtauskopplung vorgesehen, welche eine quadratische oder rechteckige Grundfläche aufweisen können.

Es ist die Aufgabe der Erfindung, eine Leuchte der eingangs beschriebenen Art, die eine Abschirmung in mehreren Ebenen aufweist, mit einem höheren Wirkungsgrad der Lichtauskopplung zur Verfügung zu stellen.

Erfindungsgemäß wird diese Aufgabe gelöst durch eine Leuchte gemäß Anspruch 1.

Die Erfindung kann vorsehen, daß der Lichtleiter ein Vollichtleiter ist. Der Lichtleiter kann allerdings auch ein Hohllichtleiter sein.

Eine Abschirmung der Leuchte bedeutet, daß in einer Ebene senkrecht zu der Lichtaustrittsfläche die mittlere Leuchtdichte oberhalb eines Grenzwinkels (Abschirmwinkel) zu einer Senkrechten zu der Lichtaustrittsfläche in dieser Ebene unterhalb eines vorbestimmten Grenzwerts liegt. Bei der erfindungsgemäßen Leuchte liegt der Abschirmwinkel in einem Bereich von 45° bis 75°, bevorzugt von 50° bis 65° und besonders bevorzugt von 55° bis 65°. Die Abschirmung kann auch in einem raumbezogenen Ebenensystem vorgesehen sein, z. B. dem C-Ebenensystem gemäß DIN 5032-1.

Die Erfindung kann vorsehen, daß in dem Lichtweg des aus der Leuchte austretenden Lichts, das über die besagte Lichtauskoppelseite ausgekoppelt wird, an oder nach der Lichtauskoppelseite nur eine Struktur aus Licht transmittierenden bzw. Licht brechenden Elementen vorhanden ist, die eine Abschirmung erzeugt.

Gemäß einer Ausführungsform der Erfindung ist in dem Lichtweg des aus der Leuchte austretenden Lichts, das über die besagte Lichtauskoppelseite des Lichtleiters ausgekoppelt wird, genau eine Struktur aus Licht transmittierenden bzw. Licht brechenden Elementen vorgesehen, welche eine Abschirmung des über diese Lichtauskoppelseite austretenden Lichts bewirkt.

Erfindungsgemäß kann die Lichteinkopplung in den Lichtleiter über eine Seite, vorzugsweise eine Schmalseite erfolgen, welche einen nicht verschwindenden Winkel mit der Lichtauskoppelfläche bildet. Dabei kann vorgesehen sein, daß die Längsrichtung der Elemente der die Abschirmung erzeugenden Struktur nicht senkrecht zu der Lampenachse steht, also mit dieser einen Winkel von weniger als 90° einschließt. Vorzugsweise ist die Längsrichtung der Elemente parallel zu der Lampenachse. Insbesondere können die Elemente der die Abschirmung erzeugenden Struktur Prismen sein.

Die Erfindung kann auch vorsehen, daß die Elemente der eine Abschirmung erzeugenden Struktur oder ein Teil davon Prismen mit einem zumindest teilweise trapezförmigen Querschnitt umfassen, wobei die kleinere Grundseite dieses Querschnitts dem Lichtleiter zugewandt ist und das dem Lichtleiter zugewandte Ende der Prismen bildet.

Gemäß einer besonderen Ausführungsform sind die Seitenflächen der Elemente gerade. Vorzugsweise sind die Elemente der die Abschirmung erzeugenden Struktur im Querschnitt auch insgesamt geradlinig. Ein Teil oder alle der mit dem Lichtleiter nicht in Kontakt stehenden Flächen dieser Elemente, wie die Seitenflächen und die von dem Lichtleiter abgewandte Fläche, können jedoch auch gekrümmt ausgebildet sein. Dies gilt insbesondere für die Seitenwände. Erfindungsgemäß können diese Elemente auch Linsen sein.

Die Elemente der die Abschirmung erzeugenden Struktur weisen auf der Seite des Lichtleiters eine nicht verschwindende Breite auf. Grundsätzlich ist es bevorzugt, diese Breite möglichst groß zu machen, um eine möglichst große Fläche zur Verfügung zu haben, über die Licht aus dem Lichtleiter in diese Elemente eintreten kann.

Erfindungsgemäß können die Elemente der die Abschirmung erzeugenden Struktur auf der Seite mit der größeren Breite unmittelbar aneinander angrenzen.

Gemäß einer Ausführungsform der Erfindung kann, insbesondere bei einem Hohllichtleiter, vorgesehen sein, daß die Elemente der die Abschirmung erzeugenden Struktur auf der dem Lichtleiter zugewandten Seite außerhalb einer Lichteintrittsfläche der Elemente, z.B. der kleinen Grundseite bei einem trapezförmigen Querschnitt, ganz oder teilweise verspiegelt sind.

Vorzugsweise sind die besagten Elemente in einer Folie oder Platte ausgebildet, wobei die Tiefe der Strukturen kleiner als die Dicke der Folie bzw. Platte ist, so daß zwischen der breiten Seite der Elemente und der von der schmalen Seite der Elemente abgewandten Seite der Platte ein Platten- bzw. Folienabschnitt nicht verschwindender Dicke verbleibt, welcher die Elemente zusammenhält. Diese Art von Strukturen läßt sich kostengünstig herstellen.

Im Rahmen der Erfindung ist jedoch auch möglich, daß die Struktur in einer Folie oder Platte ausgebildet ist, welche die schmalen Enden der besagten Elemente verbindet und das freie Ende dieser Elemente das Ende mit der größeren Breite ist, insbesondere dann, wenn die Seitenwände dieser Elemente oder die dem Lichtleiter abgewandte Seite dieser Elemente gekrümmt sind.

Erfindungsgemäß kann vorgesehen sein, daß die besagte Struktur einstückig mit einem Vollichtleiter oder einer lichtdurchlässigen Platte, welche den Hohlraum eines Hohllichtleiters begrenzt, ausgebildet ist. Dabei können die Zwischenräumen zwischen den Elementen der Struktur, insbesondere wenn es sich um Prismen mit einem trapezförmigen Querschnitt handelt, als Hohlräume in dem Lichtleiter oder der Platte ausgebildet sein, so daß auf der Lichtaustrittsseite eine durchgängige, nicht unterbrochene Fläche vorhanden ist Es ist jedoch bevorzugt, eine Folie oder Platte mit der darin ausgebildeten Struktur an dem Vollichtleiter bzw. der den Hohlraum begrenzenden Platte eines Hohllichtleiters anzubringen.

Es kann insbesondere vorgesehen sein, daß die die Abschirmung erzeugende Struktur auf einem an dem Lichtleiter angeklebten Element ausgebildet ist.

Das besagte Element kann insbesondere an einem Vollichtleiter oder einer einen Hohllichtleiter begrenzenden Platte, wie oben angegeben, angeklebt sein.

Die Wahl eines geeigneten Klebstoffs kann die optischen Eigenschaften der erfindungsgemäßen Leuchte sowohl bei Verwendung eines Vollichtleiters als auch bei Verwendung eines Hohllichtleiters in vorteilhafter Weise beeinflussen. Entsprechende Ausführungsformen werden nachfolgend zunächst für den Fall eines Vollichtleiters erläutert, wobei für Ausführungsformen mit einem Hohllichter sinngemäß der Vollichtleiter bzw. die Eigenschaften des Vollichtleiters durch die den Hohlraum des Hohllichtleiters begrenzende Platte an der Lichtaustrittsseite bzw. deren Eigenschaften zu ersetzen sind.

Bei einem Vollichtleiter haben vorzugsweise das Material des Lichtleiters und das Material des Elements mit der besagten Struktur den gleichen Brechungsindex.

Der Klebstoff hat gemäß einer bevorzugten Ausführungsform zumindest annähernd den gleichen Brechungsindex wie der Lichtleiter und/oder das Material der besagten Struktur.

Der Unterschied des Brechungsindexes des Klebstoffs zu dem Brechungsindex des Materials der die Abschirmung erzeugenden Struktur bzw. dem Lichtleiter beträgt dabei im Regelfall weniger als 10 % und bevorzugt weniger als 5 %. Bei den derzeit bevorzugten Ausführungsformen beträgt der Unterschied weniger als 2 %.

Grundsätzlich kann auch vorgesehen sein, daß der Klebstoff einen geringeren Brechungsindex als der Lichtleiter bzw. das Material der die Abschirmung erzeugenden Struktur aufweist. Ein Klebstoff mit einem geringeren Brechungsindex kann zur Verbesserung der Abschirmung in der Längsrichtung der Elemente der Struktur beitragen, was nachfolgend noch näher erläutert wird. Ein Klebstoff mit annähernd dem gleichen Brechungsindex begünstigt eine möglichst vollständige Lichtauskopplung und ist bevorzugt, wenn durch die Struktur selbst bereits eine ausreichende Abschirmung in der Längsrichtung der Elemente der Struktur erzeugt wird.

Gemäß den derzeit bevorzugten Ausführungsformen liegt der Brechungsindex des Klebstoffs zwischen 1,3 und 1, 7.

Die selben Relationen können, wie erwähnt, erfindungsgemäß auch im Falle eines Hohllichtleiters zwischen dem Brechungsindex einer den Hohlraum eines Hohllichtleiters begrenzenden Platte, dem Element mit der die Abschirmung erzeugenden Struktur und dem Klebstoff bestehen, wobei auch hier die besagte Platte und das die Struktur tragende Element den gleichen Brechungsindex haben können und/oder der Brechungsindex des Klebstoffs zumindest annähernd den gleichen Brechungsindex wie die Platte bzw. das besagte Element haben kann. Ebenso kann der Klebstoff, gemäß einer weiteren Ausführungsform, einen geringeren Brechungsindex als die besagte Platte bzw. das besagte Element aufweisen.

Die Erfindung beruht auf der überraschenden Erkenntnis, daß bei einer Leuchte mit einem Lichtleiter, insbesondere bei einem Vollichtleiter, mit einer einzigen Struktur von linienförmigen Prismen mit einem sich nach außen verbreiternden Abschnitt eine ausreichende Abschirmung erreicht werden kann. Da die linienförmigen Prismen eine größere Kontaktfläche mit dem Lichtleiter als die bislang verwendeten pyramidenstumpfförmigen Prismen haben, ist der Leuchtenwirkungsgrad deutlich besser. Bei Versuchen konnten Verbesserungen um ca. 10 % erreicht werden.

Weitere Merkmale und Vorteile der Erfindung ergeben sich aus der nachfolgenden detaillierten Beschreibung von Ausführungsbeispielen der Erfindung anhand der beigefügten Zeichnungen.

Fig. 1     zeigt schematisch den Aufbau einer erfindungsgemäßen Leuchte,

Fig. 2     zeigt schematisch eine perspektivische Darstellung einer Prismenplatte, die bei einer erfindungsgemäßen Leuchte verwendet wird,

Fig. 3     zeigt beispielhafte Lichtstärkeverteilungskurven einer erfindungsgemäßen Leuchte

Fig. 4     zeigt eine weitere beispielhafte Ausführungsform einer erfindungsgemäßen Leuchte.

Fig. 5     zeigt eine Ausführungsform einer erfindungsgemäßen Leuchte in der Form eines Downlights.

Fig. 6     zeigt schematisch einen Querschnitt durch eine Leuchte gemäß Fig. 5,

Fig. 7     zeigt schematisch einen Querschnitt durch eine weitere Ausführungsform einer erfindungsgemäßen Leuchte in der Form eines Downlights,

Fig. 8     zeigt eine alternative Ausführungsform eines erfindungsgemäßen Downlights.

Die vorangehend genannten Zeichnungen sind nicht maßstabsgerecht. Insbesondere die Prismenplatte wurde der Deutlichkeit halber im Verhältnis zu dem Lichtleiter größer dargestellt, als dies in der Regel der Fall ist.

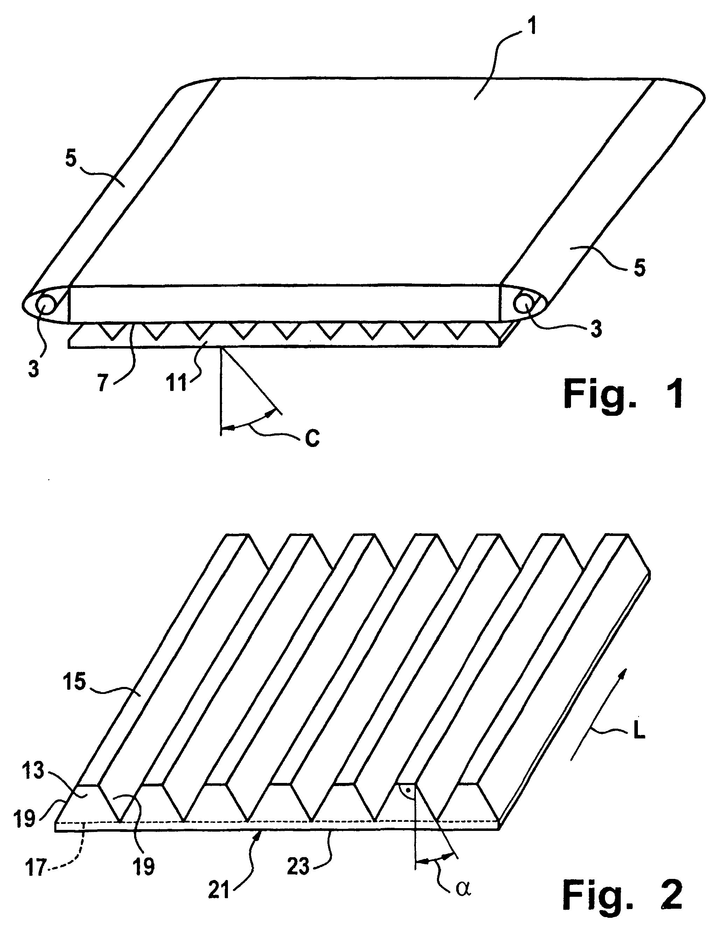

Fig. 1 zeigt schematisch die Anordnung der wesentlichen lichttechnischen Komponenten eines Ausführungsbeispiels einer erfindungsgemäßen Leuchte. An zwei einander gegenüberliegenden Schmalseiten eines Vollichtleiters 1 sind Lampen 3 angeordnet, deren Längsachse bei diesem Ausführungsbeispiel parallel zu diesen Schmalseiten ist. Diese Lampen 3 koppeln über diese Schmalseiten Licht in den Vollichtleiter 1 ein. Zur Verbesserung der Lichteinkopplung sind den Lampen Reflektoren 5 zugeordnet, welche die Lichteinkopplung verstärken. Diese Reflektoren sind nur schematisch dargestellt und sind vorzugsweise in einer konkreten Realisierung so ausgebildet, daß die Lichteinkopplung in den Vollichtleiter 1 weitgehend vollständig ist. Beispielsweise können die Reflektoren 5 eine Evolventenform aufweisen, welche verhindert, daß Licht auf die Lampe 3 zurückreflektiert wird.

Der Vollichtleiter 1 weist eine Lichtauskoppelseite 7 auf, an der eine Prismenstruktur 11 angeklebt ist, welche in Fig. 2 näher dargestellt ist. Die Prismenstruktur 11 besteht aus parallel zueinander angeordneten länglichen Prismen 13, welche in ihrer Längsrichtung, die in Fig. 2 mit dem Pfeil L bezeichnet ist, translationsinvariant sind, d.h. sie weisen in jedem Schnitt senkrecht zu der Richtung L den gleichen Querschnitt auf. Dieser Querschnitt ist trapezförmig und besitzt eine kleine Grundseite 15 und eine große Grundseite 17. Die beiden Grundseiten 15 und 17 sind durch Seitenwände 19 verbunden, welche zu der Senkrechten zu der kleinen Grundseite 15 jeweils einen Winkel $\alpha$ einschließen, der bei diesem Ausführungsbeispiel 40° beträgt und bei Anwendungen für Bildschirmarbeitsplatz-Leuchten nach den derzeit bevorzugten Ausführungsformen zwischen 35° und 45° liegt. Bei der hier dargestellten Ausführungsform sind die Prismen 13 symmetrisch, d.h. beide Seitenwände 19 schließen den gleichen Winkel zu der Grundseite 17 ein. Grundsätzlich kommen jedoch auch asymmetrische Prismen in Betracht, bei denen die Seitenwände 19 jeweils unterschiedliche Winkel zu der Grundseite 17 einschließen und/oder die kleine Grundseite 15 zu der großen Grundseite 17 geneigt ist. Die Prismen 13 sind in einer Platte 21 aus einem geeigneten Material, z.B. Polycarbonat, Polyester, Polystyrol oder Polymethylmethacrylat in herkömmlicher Weise durch Formen, Gravieren oder dgl. ausgebildet, wobei die vorangehende Aufzählung von geeigneten Materialien nicht abschließend ist.

Wie man in Fig. 2 erkennt, erstrecken sich die Prismen nicht über die gesamte Dicke der Platte 21, sondern enden in einem gewissen Abstand von der Seite 23, welche von dem Lichtleiter 1 abgewandt ist. Dieser Abstand ist in Fig. 2 durch die gestrichelte Linie angedeutet. Die Seite 23 kann entsprechend einem Muster, welches der Anordnung der Prismen 13 entspricht, mit einer zusätzlichen Struktur versehen sein. Beispielsweise kann sie in solchen Bereichen, die jeweils einem Prisma entsprechen, eine bestimmte Neigung haben, die von einem Prisma zu einem anderen wechseln kann, sie kann in diesen Bereichen konkav oder konvex gekrümmt sein oder ähnliches mehr.

Die in Fig. 2 dargestellte Prismenstruktur ist bei dem in Fig. 1 dargestellten Ausführungsbeispiel mit den Schmalseiten 15 der Prismen 13 an dem Lichtleiter über einen geeigneten Klebstoff angeklebt, wobei die Längsrichtung der Prismen L parallel zu der Längsachse der Lampen 3 ist.

Prismen mit der in Fig. 2 dargestellten Form erzeugen in einer Ebene senkrecht zu ihrer Längsachse eine Abschirmung , derart, daß die Leuchtdichte oberhalb eines Abschirmwinkels C für eine Ebene im wesentlichen senkrecht zu der Längsachse, der in Fig. 1 angedeutet ist, unter einen vorgegebenen Wert fällt. Eine solche Abschirmung wird z.B. erzeugt, wenn zwischen dem Winkel $\alpha$ und dem Abschirmwinkel C die folgenden Beziehungen bestehen:

$$(\arcsin(n_2/n_3)-\arcsin(\sin(C)/n_3))/2 \leq \alpha \leq (90°-\arcsin(1/n_3)+\arcsin(\sin(C)/n_3))/2 \qquad \text{für } n_2 \leq n_3$$

und

$$(1 - \arcsin(\sin(C)/n_3))/2 \leq \alpha \leq (90°- \arcsin(1/n_3) + \arcsin(\sin(C)/n_3))/2 \qquad \text{für } n_2 > n_3 \qquad (1)$$

wobei $n_3$ der Brechungsindex des Materials der Prismen und $n_2$ der Brechungsindex des Klebstoffs ist, mit welchem die Prismen an dem Lichtleiter angeklebt sind, bzw., allgemeiner, der Brechungsindex in dem Bereich zwischen dem Lichtleiter und den Prismen.

Im Rahmen der Erfindung hat sich überraschenderweise herausgestellt, daß sich bei der Verwendung solcher Prismen auch in einer Ebene im wesentlichen parallel zu der Längsachse L eine Abschirmung ergibt, welche den derzeitigen Normen bzw. Vorschlägen für künftige Normen genügt. Eine solche Abschirmung kann sich bereits alleine aufgrund der Struktur der Prismen ergeben. Die Abschirmung kann jedoch auch durch eine geeignete Wahl des Brechungsindex des verwendeten Klebstoffes oder des Materials der Prismen oder des Lichtleiters verbessert werden. Der Brechungsindex des Klebstoffes bzw. des Materials der Prismen kann die Abschirmung in einer Ebene parallel zu der Längsrichtung der Prismen beeinflussen. Eine Abschirmung kann z.B. erzeugt werden, wenn zwischen dem Abschirmwinkel C in einer Ebene im wesentlichen parallel zu der Längsrichtung der Prismen und dem Brechungsindex des Klebstoffs bzw. des Materials der Prismen folgende Beziehung besteht:

$$n' \leq (n_1^2 - \cos^2(C))^{1/2}, \qquad (2)$$

wobei $n_1$ der Brechungsindex des Materials des Lichtleiters ist und n' für den kleineren der beiden Werte $n_2$ und $n_3$, $n' = \min(n_2, n_3)$, steht.

Die vorangehend und nachfolgend genannten Relationen betreffend die Abschirmung, wie die vorangehend genannten Relationen (1) und (2), müssen nicht notwendigerweise im strengen Sinn erfüllt sein, um eine Abschirmung zu erreichen. In der Praxis kann sich aufgrund von Toleranzen und in Abhängigkeit von der jeweiligen Konfiguration der Leuchte, beispielsweise in Abhängigkeit von der relativen Lage der Lichteinkoppelseite und der Seite mit der Prismenplatte zueinander, eine akzeptable Abschirmung ergeben, auch wenn der Winkel $\alpha$ diese Relationen nicht mehr erfüllt.

Um die Fläche, über die Licht aus dem Lichtleiter 1 in die Prismen 13 eintreten kann, bei Vorgabe eines bestimmten Abschirmwinkels möglichst groß zu halten, ist es bevorzugt, daß die Prismen an ihrem breiten Ende, wie in Fig. 2 gezeigt, unmittelbar mit ihren Seitenwänden 19 aneinander angrenzen. Grundsätzlich ist es allerdings auch denkbar, zwischen den breiten Enden der Prismen Abstände vorzusehen.

Der Vollichtleiter 1 und die Prismen 13 bestehen vorzugsweise aus dem gleichen Material. Wenn Polymethylmethacrylat mit einem Brechungsindex von 1,49 verwendet wird, ist es bevorzugt, einen Klebstoff zum Verbinden der Prismenstruktur 11 mit dem Lichtleiter 1 zu verwenden, der einen ähnlichen Brechungsindex, beispielsweise 1,47, aufweist. Der Wirkungsgrad der Lichtauskopplung aus dem Lichtleiter wird erhöht, wenn der Brechungsindex ähnlich oder gleich ist.

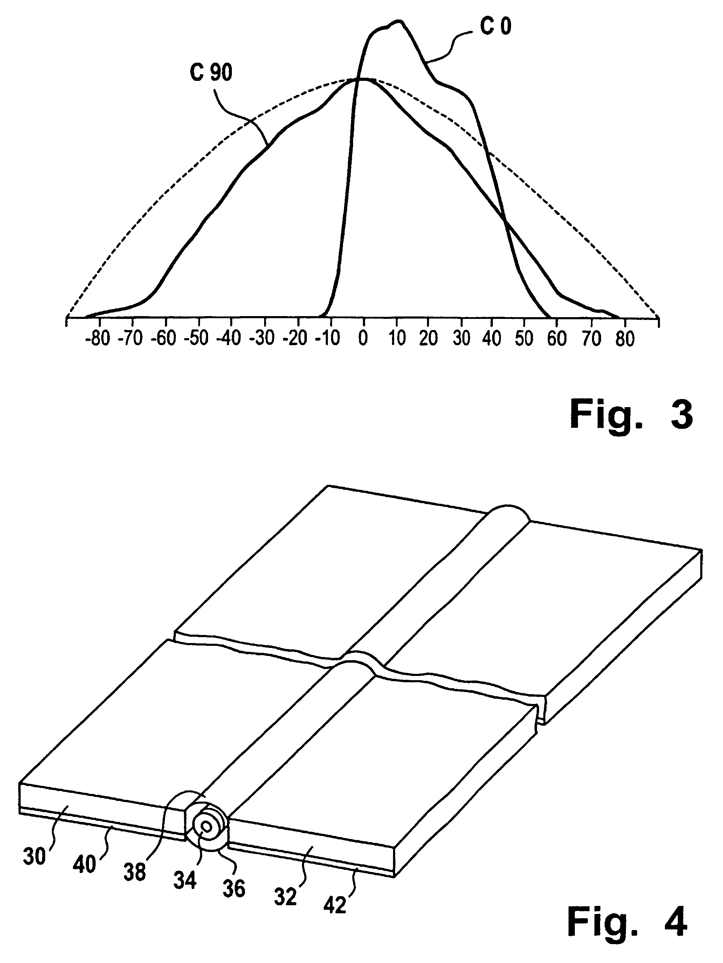

In Fig. 3 ist eine beispielhafte Lichtstärkeverteilungskurve für eine Leuchte gezeigt, die gegenüber Fig. 1 dahingehend modifiziert ist, daß nur auf einer Seite des Lichtleiters 1 eine Lampe 5 vorgesehen ist, was zu einer asymmetrischen Lichtstärkeverteilungskurve in der C0/180-Ebene führt, die in Fig. 3 mit der mit C0 markierten Linie dargestellt ist. Die Lichtstärkeverteilungskurve in der C90/270-Ebene ist durch die mit C90 markierte Linie dargestellt. Man erkennt einen deutlichen Abfall der Lichtstärke in der C90/270-Ebene oberhalb von 60°, der zu der erwähnten Abschirmung in dieser Ebene führt. Die gestrichelte Linie stellt zum Vergleich die Lichtstärkeverteilungskurve für eine freistrahlende Lampe in der C90/270-Ebene dar.

Zahlreiche Abwandlungen der vorangehend gezeigten und beschriebenen Konfiguration sind möglich. Die Seitenwände 19 der Prismen müssen nicht geradlinig sein, sondern können auch gekrümmt oder zickzackförmig sein. Beispielsweise können auch längliche Linsen verwendet werden, die senkrecht zu ihrer Längsrichtung einen konstanten Querschnitt besitzen. Andere Materialien als vorangehend beschrieben können verwendet werden.

Die von dem Lichtleiter abgewandte, breite Seite der Prismen (oder, allgemeiner, der Elemente der eine Abschirmung erzeugenden Struktur), die eine Lichtaustrittsseite der Prismen bzw. dieser Elemente bildet, muß nicht notwendigerweise gerade und nicht notwendigerweise parallel zu der Lichteintrittsfläche der Prismen sein. Diese Fläche kann vielmehr konkav oder konvex gekrümmt sein, um einen Linseneffekt zu erzeugen und/oder gegenüber der Lichteintrittsseite der Prismen, also der Seite, die dem Lichtleiter zugewandt ist, geneigt sein, um eine bestimmte gewünschte Lichtstärkeverteilungskurve zu erreichen. Beispielsweise läßt sich durch eine Neigung dieser Seite für alle Prismen in die gleiche Richtung eine asymmetrische Lichtstärkeverteilungskurve erreichen. Auf der Lichtaustrittsseite der Prismenplatte kann insbesondere auch anstelle einer konventionellen, gekrümmten Linsenstruktur eine Fresnellinse oder eine Fresnellinsenstruktur vorgesehen sein, z.B. in Form einer Gruppe von Prismen. Eine solche Fresnellinse muß nicht mit den Prismen auf der anderen Seite der Platte ausgerichtet sein und führt zu einer geringeren Dicke der Prismenplatte gegenüber Linsenstrukturen mit gekrümmten Flächen. Die Lichtaustrittsflächen der Prismen können auch paarweise gegeneinander geneigt sein oder der Neigungswinkel dieser Lichtaustrittsfläche kann über der gesamten Prismenstruktur periodisch variieren, um die Lichtstärkeverteilungskurve an bestimmte Vorgaben anzupassen, beispielsweise um die Lichtstärke in bestimmten Winkelbereichen zu verstärken.

Statt einer einzigen Prismenplatte, welche die gesamte Prismenstruktur 11 enthält, können auch mehrere derartige nebeneinander angeordnete Platten mit darin ausgebildeten Prismen verwendet werden, welche zusammen die Prismenstruktur bilden. Während es derzeit bevorzugt ist, über der gesamten Lichtauskoppelseite des Lichtleiters eine derartige Prismenstruktur vorzusehen, ist es auch möglich, die Prismen nur in einem Teilbereich dieser Lichtauskoppelseite anzubringen, in dem der Hauptanteil des Lichts ausgekoppelt wird und in dem die Leuchtdichten besonders hoch sind. Wenn die Leuchtdichten in bestimmten Bereichen der Lichtauskoppelseite des Lichtleiters ohnehin unter dem Grenzwert für die Abschirmung liegen, sind besondere Abschirmungsmaßnahmen natürlich nicht notwendig. Daher kann in solchen Bereichen ggf. auch ein Freiraum ohne Prismen, z.B. ein prismenfreier Randbereich, vorgesehen sein.

Die erfindungsgemäße Leuchte kann insbesondere als Pendelleuchte, Tischleuchte, Wandleuchte, Einbau- oder Anbauleuchte oder als Stehleuchte ausgebildet sein. Die Anordnung der Lampen in Fig. 1 ist lediglich beispielhaft. Beispielweise können, ähnlich wie in EP 0 846 915 A1 beschrieben, zwischen zwei benachbarten Lichtleitern zentral eine oder mehrere Lampen angeordnet sein, welche Licht in die Lichtleiter einkoppeln. Eine beispielhafte Ausführungsform dieser Variante ist schematisch in Fig. 4 dargestellt. Zwischen zwei Lichtleiterplatten 30 und 32 ist eine Lampe 34 angeordnet, die oben und unten durch einen Reflektor 36 bzw. 38 zur Verbesserung der Lichteinkopplung in die Lichtleiterplatten 30 und 32 umgeben ist. Auf der Unterseite der Lichtleiter 30 und 32 ist jeweils eine Prismenstruktur 40 und 42 angebracht, die jeweils wie in Fig. 2 dargestellt ausgebildet sind, wobei die Längsrichtung L der Prismen parallel zu der Längsachse der Lampe 34 verläuft.

Anstelle eines Vollichtleiters kann erfindungsgemäß auch ein Hohllichtleiter verwendet werden, in den Licht von einer oder mehreren Lampen eingekoppelt wird. In diesem Fall kann vorgesehen sein, daß die Prismenflanken 19 und ggf. Zwischenräume zwischen den einzelnen Prismen in der Prismenstruktur 11 verspiegelt sind, so daß Licht nur über die kleine Grundseite 15 der jeweiligen Prismen 13 in die Prismenstruktur 11 eintreten kann. Sofern das Licht aus dem Medium Luft in die Prismenstruktur 11 eintritt, gibt die Relation

$$(\arcsin(1/n_3) - \arcsin(\sin(C)/n_3))/2 \leq \alpha \leq \arcsin(\sin(C)/n_3) \qquad (3)$$

ein Kriterium für die Wahl des Winkels $\alpha$ zur Erzeugung einer Abschirmung, wobei $n_3$ wieder der Brechungsindex des Materials der Prismen ist. Dies ist beispielsweise der Fall, wenn die Prismenstruktur 11 den Hohlraum des Lichtleiters begrenzt. Wie vorangehend erwähnt, muß Relation (3) bei einer realen Leuchte nicht notwendigerweise streng realisiert sein, um eine Abschirmung zu erzeugen.

Andere Maßnahmen, welche z.B. die Totalreflexion in einer Platte ausnutzen, an der die Prismenstruktur 11 angeklebt ist, können alternativ oder ergänzend vorgesehen sein, um eine Lichtauskopplung ausschließlich über die Seiten 15 zu erreichen.

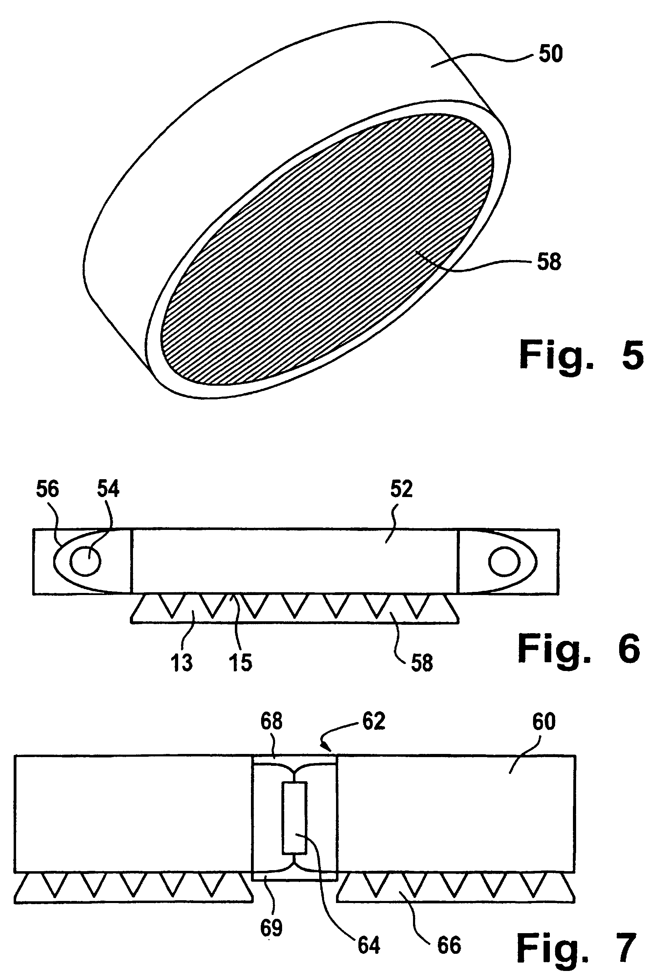

In Fig 5. ist eine Ausführungsform einer erfindungsgemäßen Leuchte in der Form eines Downlights dargestellt. Fig. 6 zeigt eine schematische Querschnittsansicht hierzu. In einem kreiszylinderförmigen Gehäuse 50 ist ein ebenfalls kreiszylinderförmiger Vollichtleiter 52 angeordnet, in den von einer Ringlampe 54 mit Hilfe eines ebenfalls ringförmigen Einkoppelreflektors 56 Licht eingekoppelt wird. Auf der Lichtaustrittsseite ist eine kreisscheibenförmige Prismenplatte 58 an den Vollichtleiter 52 angeklebt. Die Prismenplatte 58 weist eine Struktur von geradlinigen trapezförmigen Prismen 13 auf, wie sie in Fig. 2 dargestellt sind. Die Prismenplatte 58 ist so orientiert, daß die kleine Grundseite 15 der Prismen zu dem Lichtleiter 52 hinweist und die Prismen sich in der Richtung von dem Lichtleiter 52 weg verbreitern, wie dies vorangehend für die anderen Ausführungsformen beschrieben wurde. Anstelle des Vollichtleiters 52 kann auch ein Hohllichtleiter verwendet werden. In diesem Fall ist die Prismenplatte 58 an eine transparente Platte angeklebt, welche den Hohlraum des Lichtleiters auf der Lichtaustrittsseite begrenzt.

Eine alternative Ausführungsform ist in Fig. 7 dargestellt. Bei dieser Ausführungsform ist in einem ringförmigen Lichtleiter 60 eine zentrale kreiszylindrische Aussparung 62 vorgesehen, in der eine idealerweise punktförmige, in der Praxis meistens stabförmige, röhrenförmige oder ellipsoidförmige Lampe 64 eingesetzt ist, wobei die Achse der Lampe 64 mit der Symmetrieachse des Lichtleiters 60 und der Aussparung 62 zusammenfällt. Die Lampe 64 koppelt radial nach außen Licht in den Lichtleiter 60 ein, das über eine Prismenplatte 66, welche wie die Prismenplatte 58 bei dem Ausführungsbeispiel der Fig. 5 und 6 ausgebildet ist, ausgekoppelt wird. Die Wände 68 und 69, welche die Aussparung 62 oberhalb und unterhalb der Lampe 64 begrenzen, können als Reflektoren ausgebildet sein, welche die Lichteinkopplung in den Hohllichtleiter 60 optimieren. Beispielsweise können sie, wie in Fig. 7 gezeigt, eine vogelschwingenförmige Form aufweisen. Auch bei dieser Ausführungsform kann anstelle eines Vollichtleiters ein Hohllichtleiter verwendet werden.

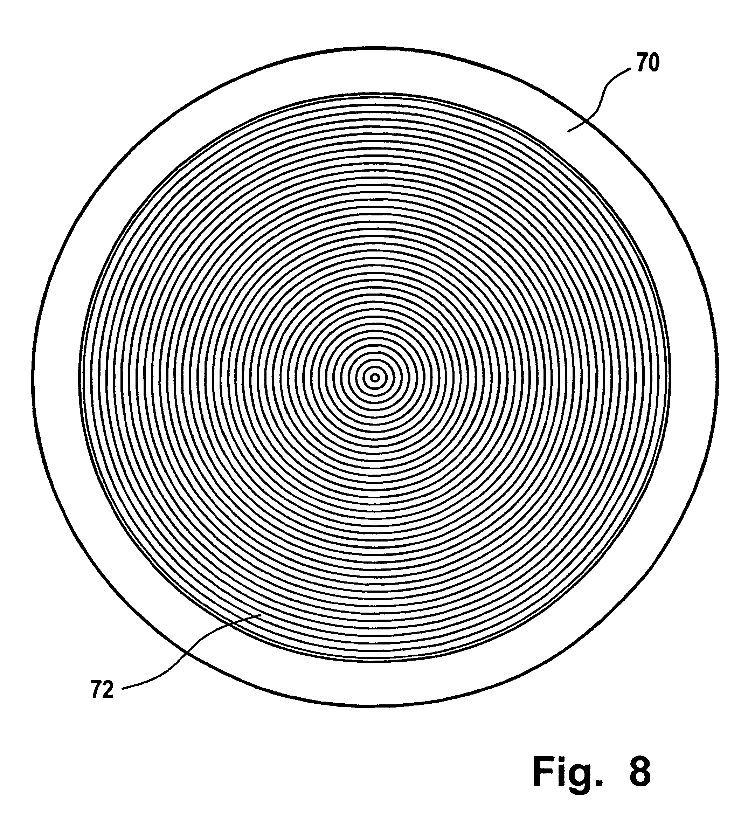

Bei dem Ausführungsbeispiel der Figuren 5 und 7 wurden geradlinige Prismen verwendet. Gemäß einer alternativen Ausführungsform, die in Fig. 8 dargestellt ist, können bei einem Downlight auch kreisförmige Prismen verwendet werden, welche in einem Querschnitt durch den Mittelpunkt der Leuchte einen trapezförmigen Querschnitt haben, wie er für die vorangehenden Ausführungsformen beschrieben wurde und beispielsweise in den Figuren 6 und 7 dargestellt ist. Fig. 8 zeigt schematisch eine Leuchte mit einem Gehäuse 70 und einer Prismenplatte 72. In einem Querschnitt durch den Mittelpunkt ist diese Leuchte wie in Fig. 6 dargestellt aufgebaut. In einer Abwandlung kann auch ein Aufbau wie in Fig. 7 gezeigt vorgesehen sein. Diese kreisförmigen Prismen weisen bezüglich der Abschirmung keine Vorzugsrichtung in verschiedenen Ebenen durch den Mittelpunkt der Lichtaustrittsöffnung und senkrecht zu der Lichtaustrittsöffnung, z.B. in verschiedenen C-Ebenen, auf. Unterschiede in der Leuchtdichte können jedoch entstehen, wenn die eingesetzte Lampe und/oder die optische Anordnung zum Einkoppeln von Licht in den Lichtleiter eine stark richtungsabhängige Lichtstärkeverteilung aufweist.

Die Ausgestaltung nach Fig. 5 bis 8 ist nicht auf Downlights beschränkt, sondern kann ebenso für Rundleuchten oder andere Leuchten mit einer kreis- oder ringförmigen Lichtaustrittsfläche verwendet werden.

Bezugszeichenliste

| 1  | Lichtleiter                    |
|----|--------------------------------|
| 3  | Lampe                          |
| 5  | Reflektor                      |
| 7  | Lichtauskoppelseite            |
| 11 | Prismenstruktur                |
| 13 | Prisma                         |
| 15 | kleine Grundseite              |
| 17 | große Grundseite               |
| 19 | Seitenwände                    |
| 21 | Platte                         |
| 23 | Lichtaustrittsseite der Platte |
| 30 | Lichtleiterplatte              |
| 32 | Lichtleiterplatte              |
| 34 | Lampe                          |
| 36 | Reflektor                      |
| 38 | Reflektor                      |
| 40 | Prismenstruktur                |
| 42 | Prismenstruktur                |
| 50 | Gehäuse                        |
| 52 | Lichtleiter                    |
| 54 | Ringlampe                      |
| 56 | Ringreflektor                  |
| 58 | Prismenplatte                  |
| 60 | Lichtleiter                    |

62     kreiszylindrische Aussparung
64     Lampe
66     Prismenplatte
68     Wand
69     Wand
70     Gehäuse
72     Prismenplatte
C      Abschirmwinkel
L      Längsrichtung der Prismen

## Patentansprüche

**1.** Innenraumleuchter mit mindestens einem Lichtleiter (1; 30, 32; 52; 60), in den von einer oder mehreren Lampen (3; 34, 54; 64) Licht über eine oder mehrere Lichteinkoppelseiten eingekoppelt wird und der mindestens eine von den Lichteinkoppelseiten verschiedene Lichtauskoppelseite (7) mit einer Lichtauskoppelfläche besitzt, über welche Licht ausgekoppelt wird, wobei zumindest an einer Lichtauskoppelseite (7) eine Struktur (11; 40, 42) vorgesehen ist, welche eine Abschirmung des über diese Lichtauskoppelseite austretenden Lichts in mehreren Ebenen bewirkt, **dadurch gekennzeichnet, daß** die Struktur Licht transmittierende Elemente (13) aufweist, die jeweils bezüglich einer Linie (L) parallel zu der Lichtauskoppelfläche translationsinvariant sind, derart, daß sie in der Richtung entlang dieser Linie einen konstanten Querschnitt besitzen, wobei diese Elemente in der Richtung senkrecht zu dieser Linie im Querschnitt eine Breite besitzen, welche, bezogen auf eine Richtung senkrecht zu der Lichtauskoppelfläche, von der dem Lichtleiter (1; 30, 32; 52; 60) zugewandten Seite zu der von dem Lichtleiter abgewandten Seite zunimmt, daß in dem Lichtweg des aus der Leuchte austretenden Lichts, das über die besagte Lichtauskoppelseite (7) des Lichtleiters (1; 30, 32; 52; 60) ausgekoppelt wird, genau eine Struktur (11; 40, 42) vorgesehen ist, welche eine Abschirmung des über diese Lichtauskoppelseite austretenden Lichts bewirkt wobei die Abschirmung derart ist, daß die Lichtstärke in einer Ebene senkrecht zu der Lichtaustrittsfläche so abfüllt, daß die mittlere Leuchtdichte oberhalb eines Abschirmwinkels zu einer Senkrechten zu der Lichtaustrittsfläche in dieser Ebene, der in einem Bereich von 45° bis 75° liegt, unterhalb von 1000 cd/m$^2$ liegt.

**2.** Leuchte nach Anspruch 1, **dadurch gekennzeichnet, daß** der Lichtleiter (1; 30, 32; 52; 60) ein Vollichtleiter ist.

**3.** Leuchte nach Anspruch 1, **dadurch gekennzeichnet, daß** der Lichtleiter ein Hohllichtleiter ist.

**4.** Leuchte nach einem der Ansprüche 1 bis 3, **dadurch gekennzeichnet, daß** ein Klebstoff den Lichtleiter (1; 30, 32; 52; 60) oder eine Platte, über die Licht aus dem Lichtleiter ausgekoppelt wird und an der das die Abschirmung erzeugende Struktur aufweisende Element befestigt ist, und das Element (13) mit der die Abschirmung erzeugenden Struktur (11) verbindet, wobei der Brechungsindex des Klebstoffs von dem Brechungsindex des Materials dieses Elements und/oder des Materials des Lichtleiters bzw. der Platte um weniger als 10 % abweicht oder kleiner als dieser ist.

**5.** Leuchte nach einem der Ansprüche 1 bis 4, **dadurch gekennzeichnet, daß** die Lichteinkopplung in den Lichtleiter (1; 30, 32; 52; 60) über eine Seite erfolgt, welche einen nicht verschwindenden Winkel mit der Lichtauskoppelseite (7) bildet, wobei die besagte Linie der Elemente (13) der die Abschirmung erzeugenden Struktur, bezüglich der die Elemente translationsinvariant sind, parallel zu der Lampenachse ist.

**6.** Leuchte nach einem der Ansprüche 1 bis 5, **dadurch gekennzeichnet, daß** Elemente der eine Abschirmung erzeugenden Struktur (11) zumindest einen Prismenabschnitt mit einem trapezförmigen Querschnitt (13) aufweisen, wobei die kleinere Grundseite (15) dieses Querschnitts dem Lichtleiter (1; 30, 32;52; 60) zugewandt ist.

**7.** Leuchte nach Anspruch 1 bis 6, **dadurch gekennzeichnet, daß** die Elemente (13) der die Abschirmung erzeugenden Struktur (11) auf der Seite mit der größeren Breite (17) unmittelbar aneinander angrenzen.

**8.** Leuchte nach einem der Ansprüche 1 bis 7, **dadurch gekennzeichnet, daß** die die Abschirmung erzeugende Struktur (11) auf einem an dem Lichtleiter angeklebten Element ausgebildet ist.

**9.** Leuchte nach Anspruch 8, **dadurch gekennzeichnet, daß** der Lichtleiter ein Hohllichtleiter ist und das Element mit der die Abschirmung erzeugenden Struktur (11) auf einer transparenten Platte aufgeklebt ist, über die Licht aus dem Hohllichtleiter ausgekoppelt wird.

10. Leuchte nach Anspruch 8 oder 9, **dadurch gekennzeichnet, daß** der Lichtleiter (1; 30, 32; 52; 60) oder eine Platte, über die Licht aus dem Lichtleiter ausgekoppelt wird und an der das die Abschirmung erzeugende Struktur aufweisende Element aufgeklebt ist, und das Material des Elements mit der die Abschirmung erzeugenden Struktur (11) sowie der Klebstoff, welcher diese verbindet, annähernd den gleichen Brechungsindex haben.

11. Leuchte nach einem der Ansprüche 1 bis 10, **dadurch gekennzeichnet, daß** die Elemente (13) der die Abschirmung erzeugenden Struktur (11) auf der dem Lichtleiter (1; 30, 32; 52; 60) zugewandten Seite außerhalb einer Lichteintrittsfläche der Elemente ganz oder teilweise verspiegelt sind.

12. Leuchte nach einem der Ansprüche 1 bis 11, **dadurch gekennzeichnet, daß** die Lichtauskoppelfläche kreisförmig ist und die Elemente der die Abschirmung erzeugenden Struktur kreisförmig verlaufen.

13. Leuchte nach Anspruch 12, **dadurch gekennzeichnet, daß** die Elemente konzentrisch zu der Lichtauskoppelfläche verlaufen.

14. Leuchte nach einem der Ansprüche 1 bis 13, **dadurch gekennzeichnet, daß** die Lichtauskoppelfläche kreisförmig ist und die Elemente der die Abschirmung erzeugenden Struktur geradlinig verlaufen.

## Claims

1. A luminaire for interior lighting comprising at least one fibre-optical light guide (1; 30, 32; 52; 60) in which light from one or more lamps (3; 34, 54; 64) is input through one or more input sides and which comprises at least one light output side (7) different from the light input sides and with a light output surface through which light is output, wherein at least on one light output side (7) a structure (11; 40, 42) is provided which screens the light emerging via the light output side in a number of planes, **characterised in that** the structure comprises light-transmitting elements (13) which are each invariant in translation relative to a line (L) parallel with the light output surface, such that in the direction along this line they have a constant cross-section, whereas in the direction at right angles to the line the elements have a width in cross-section which, relative to a direction at right angles to the light output surface, increases from the side facing the light guide (1; 30; 32; 52; 60) to the side remote from the light guide, and in the path of the light emerging from the luminaire and output via the said light output side (7) of the light guide (1; 30; 32; 52; 60) a structure (11; 40, 42) is provided in the precise place for screening the light emerging via the light output side, wherein the screening is such that in a plane at right angles to the light output surface the light intensity falls in such a way that the average brightness above a cut-off angle of 45° to 75° to the perpendicular to the light output surface in the said plane is below 1000 cd/m$^2$.

2. A luminaire according to claim 1, **characterised in that** the light guide (1; 30, 32; 52; 60) is a solid light guide.

3. A luminaire according to claim 1, **characterised in that** the light guide is a hollow light guide.

4. A luminaire according to any one of claims 1 to 3, **characterised in that** an adhesive connects the light guide (1; 30, 32; 52; 60) or a plate via which the light is output from the light guide and on which is fixed the element having the structure producing the screening, and the element (13) with the structure (11) producing the screening, the refractive index of the adhesive differing from the refractive index of the material of said element and/or the material of the light guide or plate by less than 10% or is smaller than this.

5. A luminaire according to any of claims 1 to 4, **characterised in that** light is input into the light guide (1; 30, 32; 52; 60) via a side which is at a non-vanishing angle to the light output side (7), wherein the said line of the elements (13) of the screening structure, relative to which the elements are invariant in translation, is parallel with the lamp axis.

6. A luminaire according to any of claims 1 to 5, **characterised in that** elements of the screening structure (11) comprise at least one prism portion with a trapezoidal cross-section (13), wherein the minor base (15) of the cross-section faces the light guide (1; 30, 32; 52; 60).

7. A luminaire according to claims 1 to 6, **characterised in that** the elements (13) of the screening structure (11) are immediately adjacent one another on the wider side (17).

8. A luminaire according to any of claims 1 to 7, **characterised in that** the screening structure (11) is formed on an element stuck to the light guide.

9. A luminaire according to claim 8, **characterised in that** the light guide is a hollow light guide and the element with the screening structure (11) is stuck to a transparent plate via which light is output from the hollow light guide.

10. A luminaire according to claim 8 or 9, **characterised in that** the light guide (1; 30, 32; 52, 60) or a plate via which light is output from the light guide and to which the element with the screening structure is stuck, and the material of the element with the screening structure (11) and the adhesive connecting it have approximately the same refractive index.

11. A luminaire according to any of claims 1 to 10, **characterised in that** the elements (13) of the screening structure (11), on the side facing the light guide (1; 30, 32; 52, 60), are partly or completely metal-coated outside a light input surface of the elements.

12. A luminaire according to any of claims 1 to 11, **characterised in that** the light output surface is circular and the elements of the screening structure extend in a circle.

13. A luminaire according to claim 12, **characterised in that** the elements are concentric with the light output surface.

14. A luminaire according to any of claims 1 to 13, **characterised in that** the light output surface is circular and the elements of the screening structure are straight.

## Revendications

1. Luminaire d'intérieur comportant au moins un conduit de lumière (1 ; 30, 32; 52; 60) dans lequel une ou plusieurs lampes (3 ; 34, 54 ; 64) envoient de la lumière par un ou plusieurs côtés d'entrée de lumière et qui présente au moins un côté de sortie de lumière (7) différent des côtés d'entrée de lumière qui a une surface de sortie de lumière par laquelle de la lumière sort, au moins sur un côté de sortie de lumière (7) étant prévue une structure (11 ; 40, 42) qui produit dans plusieurs plans un masquage de la lumière qui sort par ce côté de sortie de lumière, **caractérisé par le fait que** la structure présente des éléments transmetteurs de lumière (13) qui sont chacun invariants en translation par rapport à une ligne (L) parallèle à la surface de sortie de lumière, de façon telle qu'ils aient une section constante dans la direction de cette ligne, ces éléments ayant en coupe, dans la direction perpendiculaire à cette ligne, une largeur qui, par rapport à une direction perpendiculaire à la surface de sortie de lumière, augmente du côté dirigé vers le conduit de lumière (1 ; 30, 32 ; 52 ; 60) au côté opposé au conduit de lumière, que sur le trajet de la lumière sortant du luminaire qui sort par ledit côté de sortie (7) du conduit de lumière (1 ; 30, 32 ; 52 ; 60) est prévue exactement une structure (11 ; 40, 42) qui produit un masquage de la lumière qui sort par ce côté de sortie de lumière, le masquage étant tel que l'intensité lumineuse dans un plan perpendiculaire à la surface de sortie de lumière baisse de façon que la luminance moyenne au-dessus d'un angle de masquage par rapport à une perpendiculaire à la surface de sortie de lumière dans ce plan qui est compris entre 45° et 75° soit inférieure à 1000 cd/m$^2$.

2. Luminaire selon la revendication 1, **caractérisé par le fait que** le conduit de lumière (1 ; 30, 32 ; 52 ; 60) est un conduit de lumière plein.

3. Luminaire selon la revendication 1, **caractérisé par le fait que** le conduit de lumière est un conduit de lumière creux.

4. Luminaire selon l'une des revendications 1 à 3, **caractérisé par le fait qu'**une colle joint à l'élément (13) , avec la structure (11) qui produit le masquage, le conduit de lumière (1 ; 30, 32 ; 52, 60), ou une plaque par laquelle la lumière sort du conduit de lumière et sur laquelle est fixé l'élément présentant la structure qui produit de masquage, l'indice de réfraction de cette colle différant de moins de 10 % de l'indice de réfraction de la matière de cet élément et/ou de la matière du conduit de lumière ou de la plaque, ou étant inférieur à cet indice de réfraction.

5. Luminaire selon l'une des revendications 1 à 4, **caractérisé par le fait que** l'entrée de lumière dans le conduit de lumière (1 ; 30, 32; 52, 60) a lieu par un côté qui fait un angle non minime avec le côté de sortie de lumière (7), ladite ligne des éléments (13) de la structure qui produit le masquage par rapport à laquelle les éléments sont invariants en translation étant parallèle à l'axe de la lampe ou des lampes.

6. Luminaire selon l'une des revendications 1 à 5, **caractérisé par le fait que** des éléments de la structure (11) qui produit un masquage présentent au moins une partie à prismes ayant une section trapézoïdale (13), le petit côté de base (15) de cette section étant dirigé vers le conduit de lumière (1 ; 30, 32 ; 52, 60).

7. Luminaire selon les revendications 1 à 6, **caractérisé par le fait que** les éléments (13) de la structure (11) qui produit le masquage sont immédiatement contigus sur le côté ayant la plus grande largeur (17).

8. Luminaire selon l'une des revendications 1 à 7, **caractérisé par le fait que** la structure (11) qui produit le masquage est formée sur un élément collé au conduit de lumière.

9. Luminaire selon la revendication 8, **caractérisé par le fait que** le conduit de lumière est un conduit de lumière creux et l'élément pourvu de la structure ( 11) qui produit le masquage est collé sur une plaque transparente par laquelle la lumière sort du conduit de lumière creux.

10. Luminaire selon l'une des revendications 8 et 9, **caractérisé par le fait que** le conduit de lumière (1 ; 30, 32 ; 52, 60) ou une plaque par laquelle la lumière sort du conduit de lumière et sur laquelle est collé l'élément qui présente la structure qui produit le masquage, et la matière de l'élément pourvu de la structure (11) qui produit le masquage ainsi que la colle qui joint celles-ci ont approximativement le même indice de réfraction.

11. Luminaire selon l'une des revendications 1 à 10, **caractérisé par le fait que** les éléments (13) de la structure (11) qui produit le masquage sont entièrement ou partiellement réflectorisés sur le côté dirigé vers le conduit de lumière (1 ; 30, 32 ; 52, 60) à l'extérieur d'une surface d'entrée de lumière des éléments.

12. Luminaire selon l'une des revendications 1 à 11, **caractérisé par le fait que** la surface de sortie de lumière est circulaire et les éléments de la structure qui produit le masquage sont circulaires.

13. Luminaire selon la revendication 12, **caractérisé par le fait que** les éléments s'étendent concentriquement à la surface de sortie de lumière.

14. Luminaire selon l'une des revendications 1 à 13, **caractérisé par le fait que** la surface de sortie de lumière est circulaire et les éléments de la structure qui produit le masquage sont rectilignes.

1

5

5

3

3

7    11

C

**Fig. 1**

15

13

19

17

19

21    23

L

α

**Fig. 2**

**Fig. 3**

**Fig. 4**

50

58

**Fig. 5**

56    54                    52

13    15                    58

**Fig. 6**

68        62              60

69        64        66

**Fig. 7**

**Fig. 8**